# FASCICULE DE BREVET EUROPEEN

(11) **EP 3 674 208 B1**
(45) Date de publication et mention de la délivrance du brevet: **25.10.2023**
(21) Numéro de dépôt: 19218098.2
(22) Date de dépôt: 19.12.2019
(51) Int. Cl.: B64C 21/06, B64D 27/20, B64D 35/02, B64D 35/08, F02C 6/02, F02C 7/36, F02K 3/04, F02K 3/12, F01D 13/00

(54) **SYSTÈME DE PROPULSION BLI À TROIS PROPULSEURS ARRIÈRES**
BLI-ANTRIEBSSYSTEM MIT DREI HECKTRIEBWERKEN
BLI PROPULSION SYSTEM WITH THREE REAR PROPELLERS

(30) Priorité: 24.12.2018 FR 1874098
(43) Date de publication de la demande: 01.07.2020
(73) Titulaire: Airbus Operations, 31060 Toulouse (FR)
(72) Inventeur: NEGULESCU, Camil, 31400 TOULOUSE (FR); ABELE, Antoine, 31300 TOULOUSE (FR)
(74) Mandataire: Gevers & Orès

(56) Documents cités:
- EP-A1- 1 267 063
- EP-B1- 1 267 063
- FR-A- 1 339 141
- FR-A1- 3 041 933
- FR-A1- 3 064 028
- US-A1- 2012 128 487
- US-A1- 2019 031 363

## Description

L'invention concerne les systèmes de propulsion d'aéronefs et plus spécifiquement leur composition et implantation sur un aéronef.

Les aéronefs commerciaux présentent le plus souvent une architecture générale comprenant un fuselage, une voilure comportant deux ailes et un empennage situé sur la partie arrière du fuselage. De tels aéronefs comportent en outre un système de propulsion comprenant un ou plusieurs groupes propulseurs, les plus communément employés étant des turboréacteurs. Les groupes propulseurs peuvent être implantés sur l'aéronef selon différentes configurations. Le plus couramment, ils sont suspendus au-dessous des ailes par des mats de support, mais ils peuvent aussi être fixés à l'arrière du fuselage par des mats ou au niveau de l'empennage.

Lors du déplacement dans l'air de l'aéronef, ses surfaces externes influent sur l'écoulement de l'air. En particulier, lors du déplacement d'un profil aérodynamique dans l'air, une couche limite se crée à la surface de ce profil aérodynamique. Cette couche limite correspond à une zone dans laquelle la vitesse d'écoulement de l'air est ralentie par la viscosité de l'air en contact avec les surfaces du profil.

En général, les groupes propulseurs sont configurés de façon à ne pas aspirer cette couche limite se créant sur les surfaces aérodynamiques de l'aéronef. Pour cela les groupes propulseurs sont le plus communément montés afin que leur entrée d'air soit située dans un flux d'air libre, c'est-à-dire peu ou pas perturbé par les surfaces de l'aéronef. C'est le cas lorsque par exemple les groupes propulseurs sont suspendus sous la voilure ou à distance du fuselage sur la partie arrière d'un aéronef.

Néanmoins, l'ingestion par le groupe propulseur de cette couche limite présente certains avantages améliorant l'efficacité de la propulsion de ces aéronefs et réduisant leur consommation spécifique, c'est-à-dire la consommation de carburant rapportée à la poussée de l'aéronef. Afin de profiter de ces avantages un groupe propulseur peut ainsi être configuré pour ingérer la couche limite. De tels groupes propulseurs sont généralement désignés par l'acronyme BLI pour « Boundary Layer Ingestion ». Une possible configuration d'un groupe propulseur de type BLI sur un aéronef est son implantation en partie arrière du fuselage.

Un exemple de groupe propulseur BLI implanté en partie arrière de fuselage est décrit dans la demande brevet US-A1 -2017/0081034. Dans la suite, lorsque nécessaire, les positions axiales relatives des composants du système de propulsion ou des autres éléments constitutifs de l'aéronef seront indiquées par rapport à la direction du flux de gaz traversant les propulseurs. Le système de propulsion d'aéronef décrit dans le document de l'art antérieur référencé ci-dessus, comporte un propulseur de type BLI implanté au niveau de la queue de l'aéronef et deux propulseurs classiques, ici des turboréacteurs, implantés sous les ailes formant la voilure de l'aéronef. Dans cette configuration la poussée nette ou totale de l'aéronef résulte de l'addition de la poussée du propulseur BLI et de la poussée des deux turboréacteurs. Le propulseur BLI comprend une unité motrice couplée mécaniquement à une soufflante qu'elle entraine en rotation. L'unité motrice du propulseur BLI est constituée d'un moteur électrique et la soufflante est située en aval de l'unité motrice.

Quant à eux, les turboréacteurs comprennent une soufflante reliée en aval à l'axe d'une turbine à gaz qui forme le coeur du turboréacteur, l'axe de la turbine à gaz entrainant en rotation la soufflante et un générateur électrique. Chacun des turboréacteurs peut entrainer un générateur ou, comme divulgué dans le document de l'état de la technique référencé ci-dessus, ils peuvent entrainer mécaniquement un générateur implanté dans le fuselage au niveau des ailes. Dans cette configuration, le moteur électrique du propulseur BLI est alimenté par l'énergie électrique produite par ce générateur et un réseau de câbles électriques relient le générateur situé au niveau des ailes au moteur électrique situé en queue de fuselage. La transformation de l'énergie mécanique directement produite par les turboréacteurs en énergie électrique et son transport jusqu'au moteur électrique entraînant la soufflante du propulseur BLI conduisent à une perte de rendement énergétique de 5 à 10% ce qui réduit considérablement les bénéfices en économie d'énergie induits par l'utilisation d'un propulseur BLI arrière. De plus, la chaine de transmission électrique constituée par le générateur électrique, le moteur électrique et les câbles qui les relient, alourdit considérablement l'aéronef ce qui impacte aussi négativement la consommation de carburant et réduit d'autant plus les bénéfices attendus par l'implantation d'un propulseur BLI.

Le remplacement de la transmission électrique par une transmission mécanique, qui entraine des pertes énergétiques moindres, n'est pas réaliste dans cette configuration car son poids due à la longue distance séparant les ailes de la queue du fuselage serait bien trop important. Tout aussi peu réaliste serait le remplacement du moteur électrique par une turbine à gaz distincte pour constituer l'unité motrice du propulseur BLI car cela générerait un surcoût de maintenance considérable. EP 1 267 063 A1 divulgue un aéronef comprenant des premier et deuxième dispositifs de propulsion couplés par un dispositif de transmission et situés à l'arrière du fuselage.

Le but de de l'invention consiste donc à proposer un système de propulsion d'aéronef réduisant la consommation en carburant du système de propulsion d'aéronef en optimisant son rendement énergétique et en optimisant les avantages découlant de l'implantation en queue de fuselage d'un propulseur BLI.

Ce but est atteint par l'objet de l'invention qui consiste en un aéronef comprenant un fuselage et une voilure, le fuselage comprenant une partie arrière de fuselage et une queue, ledit aéronef comprenant également un système de propulsion comprenant un premier dispositif de propulsion situé au niveau de la queue dudit fuselage et constitué d'au moins un propulseur BLI comprenant une soufflante ; un deuxième dispositif de propulsion constitué d'au moins un turboréacteur double flux ; et un dispositif de transmission couplant les premier et deuxième dispositifs de propulsion afin de transmettre une partie de l'énergie générée par le deuxième dispositif de propulsion au premier dispositif de propulsion, ainsi ledit deuxième système de propulsion génère l'énergie nécessaire pour entrainer en rotation la soufflante du propulseur de type BLI. Dans ledit système de propulsion, la poussée produite par les premier et deuxième dispositifs de propulsion contribue à générer la poussée totale de l'aéronef.

Ainsi, le groupe propulseur d'aéronef selon l'invention est tel que le au moins un turboréacteur double flux constituant le deuxième dispositif de propulsion est situé au moins d'un côté de la partie arrière du fuselage entre la queue du fuselage et la voilure de l'aéronef ; le premier dispositif de propulsion génère entre 20% et 80% de la poussée totale de l'aéronef, et le dispositif de transmission intègre au moins un dispositif de sécurité intermittent apte à interrompre ou à réduire à un minimum la transmission d'énergie mécanique en cas de surcharge et à ramener la transmission d'énergie mécanique à un fonctionnement normal lorsque la surcharge disparaît.

L'agencement des turboréacteurs en partie arrière du fuselage à proximité de la queue où sont implantés le propulseur BLI et son unité motrice permet de réduire la distance sur laquelle l'énergie doit être transmise entre les turboréacteurs et le propulseur BLI. Cette disposition entraîne une réduction du poids du système permettant la transmission d'énergie des turboréacteurs au propulseur de type BLI et une diminution de la perte énergétique induite par cette transmission d'énergie.

Dans une configuration particulièrement avantageuse du système de propulsion d'aéronef selon l'invention, le deuxième dispositif de propulsion comprend deux propulseurs classiques situés de part et d'autre de la partie arrière du fuselage de l'aéronef, et le premier dispositif de propulsion comprend un propulseur BLI.

De préférence, dans le système de propulsion ledit dispositif de transmission est essentiellement de type mécanique.

Plus particulièrement, dans le système de propulsion, le dispositif de transmission comprend au moins un arbre de transmission primaire relié mécaniquement au deuxième dispositif de propulsion et un arbre de transmission secondaire relié mécaniquement au premier dispositif de propulsion.

Avantageusement, l'arbre de transmission secondaire est relié mécaniquement par une de ses extrémités à la soufflante dudit propulseur BLI ; et le dispositif de transmission comprend deux arbres de transmission primaire chacun relié mécaniquement par une de leur extrémité à un des propulseurs classiques.

De préférence, un dispositif de sécurité est intégré sur chacun des arbres de transmission primaire et secondaire et/ou au niveau des rotors des propulseurs classiques.

De préférence, les propulseurs classiques sont chacun reliés à la partie arrière de fuselage par un mât profilé et les arbres de transmission primaire sont montés en arrière des mâts et transversalement à l'axe général du fuselage.

D'autres caractéristiques et avantages de l'invention sont mis en évidence par la description ci-après d'exemples non-limitatifs de réalisation des différents aspects de l'invention. La description se réfère aux figures annexées qui sont aussi données à titre d'exemples de réalisation non limitatifs de l'invention :
[Fig.1] La figure 1 représente une vue de côté en demi-coupe d'un propulseur BLI ;
[Fig. 2] La figure 2 représente une vue de dessus d'un aéronef comportant deux turboréacteurs et un propulseur BLI ;
[Fig. 3] La figure 3 représente une vue de côté avec des coupes partielles d'une partie arrière d'aéronef comportant un système de propulsion selon l'invention ;
[Fig. 4] La figure 4 représente une vue de dessus en demi-coupe de la partie arrière du fuselage avec un système de propulsion selon l'invention ;

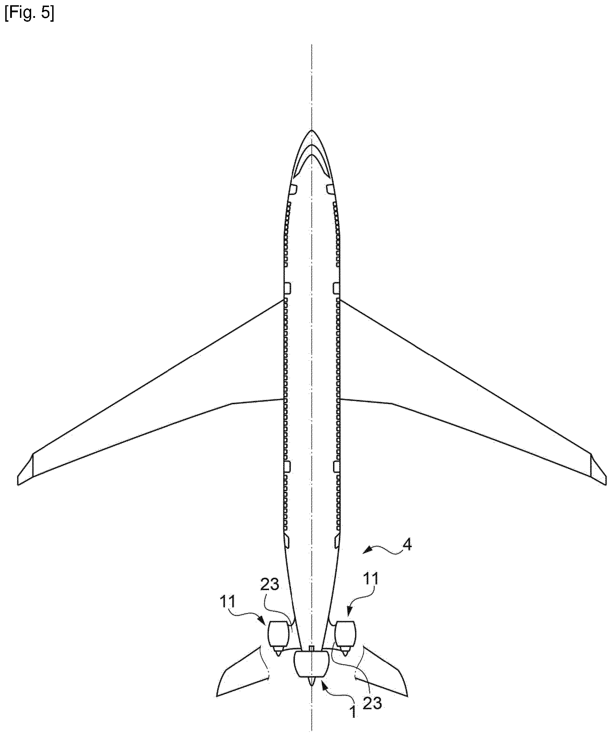

[Fig. 5] La figure 5 illustre un aéronef en vue de dessus équipé d'un système de propulsion selon l'invention.

Dans la suite, les positions axiales relatives des composants du groupe propulseur seront indiquées par rapport à la direction du flux de gaz traversant les propulseurs. Conventionnellement, un aéronef est mu par un système de propulsion comportant un ou plusieurs propulseurs. Ces propulseurs sont le plus souvent des turboréacteurs qui sont fixés généralement sous les ailes de l'aéronef. Néanmoins, les systèmes de propulsion d'aéronef peuvent aussi inclure un propulseur à ingestion de couche limite, aussi appelé propulseur BLI. BLI est l'acronyme de l'appellation anglaise « Boundary Layer Ingestion ». La position la plus appropriée pour un propulseur BLI est au niveau de la partie arrière du fuselage. En effet, positionner un propulseur BLI en queue de fuselage permet à la soufflante de celui-ci d'ingérer tout ou au moins une partie substantielle de la couche limite du fuselage avec une perte d'efficacité réduite de la soufflante due aux turbulences.

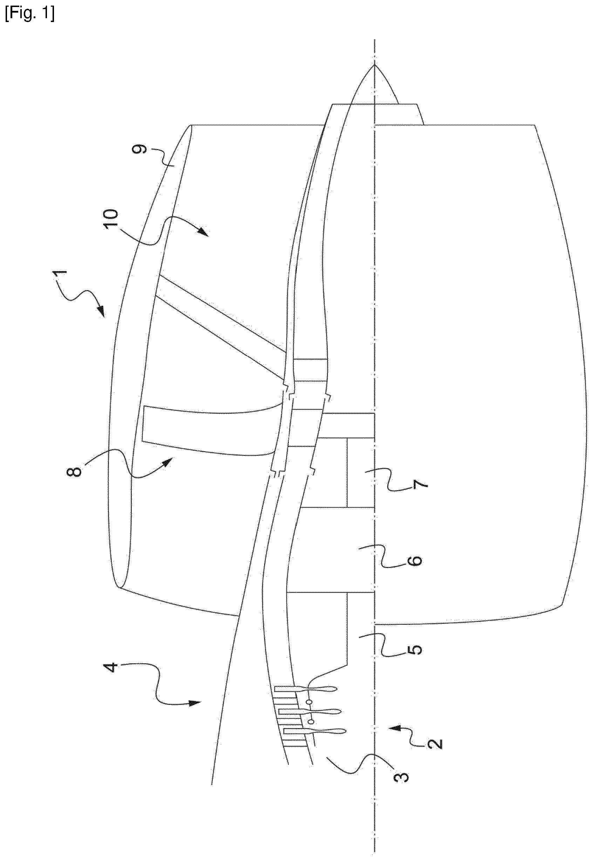

Typiquement, comme illustré sur la figure 1, lorsque la poussée d'un aéronef est assurée par un propulseur BLI 1, celui-ci comporte une unité motrice 2 comprenant un moteur 3 situé en partie arrière du fuselage 4. Le moteur 3 peut être une turbine à gaz, un turboréacteur, ou tout autre type de moteur tel que par exemple un moteur électrique. Dans la figure 1, le moteur 3 est une turbine à gaz. Le moteur 3 présente un rotor 5 qui est en général couplé à une boite de vitesse 6. La sortie de la boite de vitesse 6 est reliée à un arbre de soufflante 7 pour entrainer en rotation une soufflante 8. La boite de vitesse 6 peut être un train épicycloïdal ou tout autre système de transmission permettant d'adapter la vitesse de rotation de l'arbre de soufflante 7 à celle du rotor 5. Dans les propulseurs BLI 1 montés en queue de fuselage 4, le moteur 3 est également situé dans la partie arrière du fuselage en amont de la soufflante 8. La soufflante 8 est située en aval du moteur 3 et est logée dans une nacelle 9 qui présente un conduit intérieur 10 dans lequel l'air est aspiré par la soufflante 8.

Dans le cas où la propulsion de l'aéronef est assurée par le seul propulseur BLI 1, une turbine à gaz génère l'énergie nécessaire à entrainer la soufflante. Cette turbine à gaz peut être logée à l'intérieur de la partie arrière du fuselage 4 ou à l'extérieur du fuselage. Dans une telle configuration, si le propulseur BLI arrière ou la turbine à gaz qui l'entraine deviennent inopérants, l'aéronef subit une perte totale de propulsion. D'une part, lorsqu'une turbine à gaz est située à l'extérieur du fuselage, cela augmente la surface en contact avec le flux d'air environnant l'aéronef et donc sa trainée aérodynamique. D'autre part, la turbine additionnelle étant en configuration libre, elle est très bruyante. Par contre, si la turbine à gaz est située à l'intérieur du fuselage, une protection thermique est nécessaire. Cette configuration ne résout pas les problèmes de sécurité liés à une défaillance de la turbine à gaz entrainant la soufflante du propulseur BLI ou à une défaillance du propulseur BLI. L'accessibilité de la turbine à gaz interne est malaisée pour son entretien, et les problèmes liés aux défaillances d'un propulseur unique ne sont pas résolus. Un problème supplémentaire lié à l'utilisation d'un seul propulseur BLI pour assurer la propulsion de l'aéronef, est sa taille. Pour propulser un aéronef commercial, la taille du propulseur devient conséquente avec un diamètre de soufflante de l'ordre de 3 mètres. Ainsi la taille du propulseur BLI arrière limite l'angle d'inclinaison de l'aéronef au décollage et donc son poids maximum au décollage.

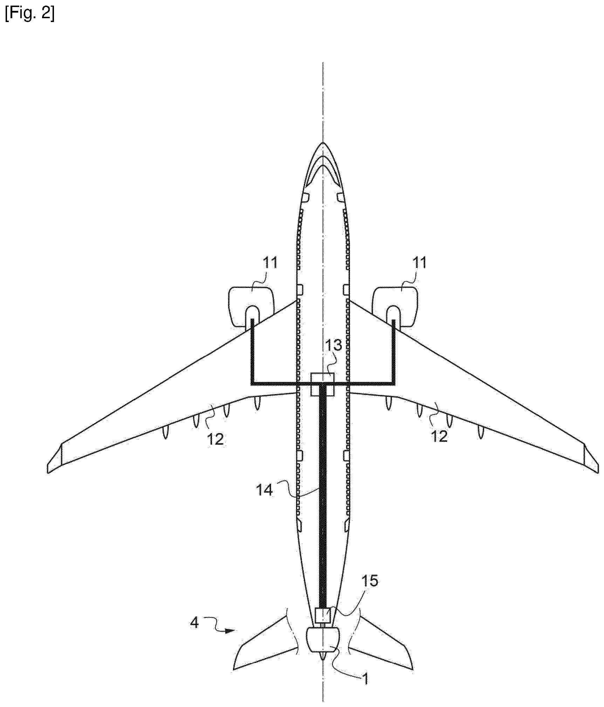

Comme mis en oeuvre dans un aéronef illustré à la figure 2, une autre architecture de système de propulsion d'aéronef à propulsion BLI comprend, en plus d'un propulseur BLI 1 situé en queue de fuselage 4, deux propulseurs conventionnels de type turboréacteur 11. Ces turboréacteurs 11 sont situés chacun sous une aile 12 et ils génèrent à eux deux entre 60% et 80% de la poussée de l'aéronef. Le propulseur BLI 1 assure quant à lui entre 20% et 40% de la poussée de l'aéronef. Dans cette configuration mixte, ce sont les turboréacteurs 11 qui génèrent l'énergie nécessaire à entrainer en rotation la soufflante du propulseur BLI 1. Néanmoins, du fait de la distance importante entre les turboréacteurs 11 et le propulseur BLI 1, la distribution d'énergie entre les turboréacteurs 11 et le propulseur BLI 1 est réalisée par un couplage électrique.

Comme illustré à la figure 2 les rotors des turboréacteurs 11 sont couplés mécaniquement soit à un générateur électrique commun 13 soit chacun à un générateur électrique respectif. Un câblage électrique de puissance 14 relie le ou les générateurs électriques 13 à un moteur électrique 15 couplé mécaniquement à la soufflante du propulseur BLI 1 comme décrit ci-avant. La transformation de l'énergie mécanique des turboréacteurs en énergie électrique puis de nouveau en énergie mécanique entraîne une perte énergétique comprise entre 5% et 10% ce qui impacte négativement l'efficacité globale du système de propulsion et réduit considérablement le bénéfice d'avoir un propulseur BLI pour réduire la consommation en carburant de l'aéronef. De plus les éléments constitutifs de la chaîne de transmission électrique, c'est-à-dire le ou les générateurs 13, le moteur électrique 15 et le câblage 14, ajoutent un surpoids considérable à l'aéronef. Les générateurs électriques délivrent une puissance constante au propulseur BLI entre les différentes phases de vol, cette puissance étant définie par la capacité maximale d'absorption du système électrique. Ainsi, dans cette configuration, l'ensemble des trois systèmes propulsifs ne fonctionnent pas à leur optimum entre ces différentes phases de vol. Pour toutes ces raisons, ces systèmes de propulsion ne délivrent que des gains limités en consommation de carburant. Dans cette architecture du système de propulsion, le remplacement de la transmission électrique par une transmission mécanique, qui limiterait les pertes énergétiques dévolues à la transmission, n'est pas envisageable du fait de la longueur de l'arbre de transmission entre les ailes 12 et la queue du fuselage 4, et du surpoids excessif qui en résulterait. De même, l'adjonction d'une turbine à gaz distincte pour entrainer la soufflante du propulseur BLI, en plus des turboréacteurs 11, n'est pas réaliste du fait de l'augmentation directe du cout de maintenance que cela entraînerait.

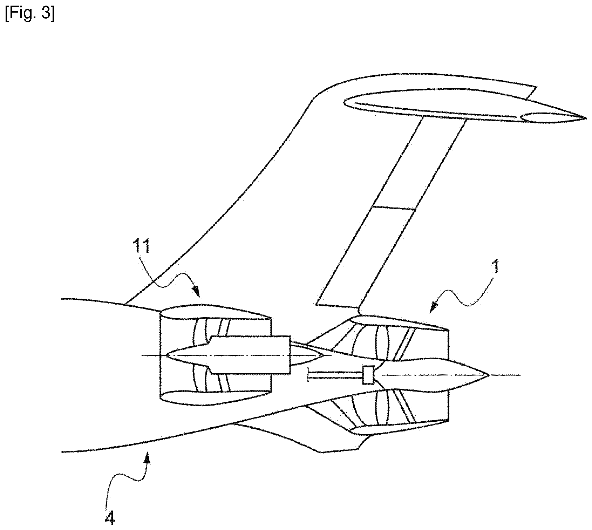

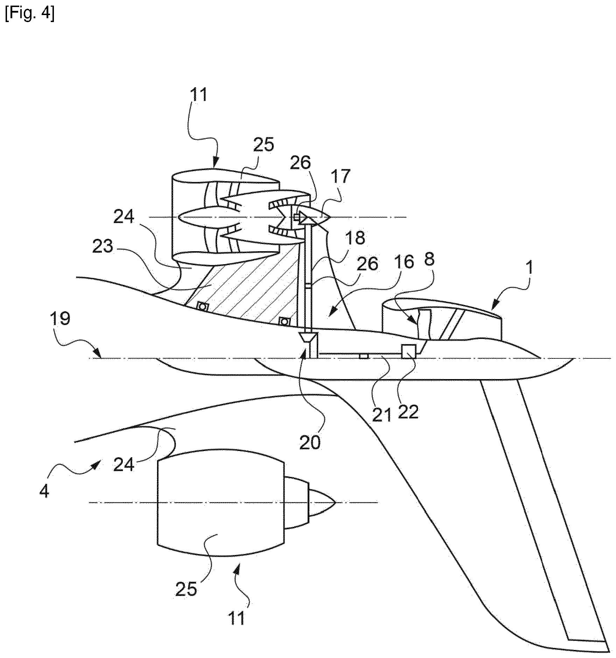

L'invention propose une alternative aux systèmes de propulsion BLI décrits ci-dessus qui permet de réduire sensiblement la consommation en carburant de l'aéronef par une optimisation de l'architecture du système de propulsion comprenant un propulseur BLI arrière. Comme illustré aux figures 3 et 4, le système de propulsion selon l'invention comprend en plus d'un unique propulseur BLI arrière 1 deux turboréacteurs 11 situés de chaque côté de la partie arrière du fuselage 4 en amont du propulseur BLI arrière 1. La proportion de la poussée assurée par le propulseur BLI 1 arrière est d'au moins un tiers de la poussée totale de l'aéronef. Le diamètre de la soufflante du propulseur BLI arrière 1 est réduit à environ 1,75 m au lieu de 3 m lorsque le propulseur BLI assure seul la poussée de l'aéronef. La taille réduite du propulseur BLI autorise une plus grande inclinaison de l'aéronef au décollage. Les deux turboréacteurs 11 présentent un taux de dérivation du flux de gaz compris entre environ 5 et 6. Une transmission mécanique 16 assure la distribution de l'énergie entre les turboréacteurs 11 et le propulseur BLI arrière 1 afin d'entrainer en rotation la soufflante du propulseur BLI 1.

Dans cette configuration, la répartition de la puissance ou de la poussée du système de propulsion entre les différents propulseurs ne fluctue que faiblement entre les phases de vol d'un aéronef au décollage, durant l'ascension, et en régime de croisière. La part de la poussée totale dévolue au propulseur BLI arrière 1 est comprise entre 20% et 80% selon le niveau de compromis souhaité entre l'efficacité propulsive et l'inclinaison au décollage de l'aéronef, donc son poids maximum au décollage, en optimisant le diamètre du propulseur BLI arrière 1.

Chaque turboréacteur 11 est relié mécaniquement au travers d'un renvoi d'angle primaire 17 à un arbre transversal 18. Ces renvois d'angle primaires 17 peuvent être constitués, par exemple, par des pignons coniques ou des joints homocinétiques. Ces axes transversaux 18 sont positionnés transversalement par rapport à l'axe longitudinal de l'aéronef 19 de part et d'autre de la partie arrière du fuselage 4. Au niveau du fuselage, en amont du propulseur BLI 1, les arbres transversaux 18 sont reliés mécaniquement de part et d'autre d'un renvoi d'angle secondaire 20 qui peut être constitué d'un ensemble de pignons coniques dont la sortie est reliée à un arbre longitudinal 21 orienté dans l'axe de l'aéronef 19. Dans sa partie avale, l'axe longitudinal est relié mécaniquement à la soufflante 8 du propulseur BLI arrière 1. La soufflante 8 du propulseur BLI 1 situé en queue de fuselage est reliée à la partie avale de l'arbre longitudinal 21. Une boite de vitesse 22 peut être insérée entre l'arbre longitudinal et la soufflante. La perte d'énergie imputable à cette transmission mécanique n'est que de l'ordre de 1%, ce qui est très inférieur aux 5 à 10% de perte de la transmission électrique. En outre, le poids de la transmission mécanique mis en oeuvre dans le système de propulsion selon l'invention est compris entre 300 kg et 500 kg ce qui est bien inférieur au poids de la transmission électrique décrite ci-dessus.

Le poids de la transmission mécanique du système de propulsion selon l'invention est également inférieur à celui de l'unité motrice d'un propulseur BLI entrainé par une turbine à gaz. En effet, dans le concept selon l'invention, seulement une fraction de la puissance totale, correspondant à la propulsion du propulseur BLI (c'est-à-dire de 33 à 60%) passe par la transmission mécanique. De plus, le système de propulsion selon l'invention est bien moins bruyant qu'un système de propulsion dont la soufflante du propulseur BLI est mue en rotation par une turbine à gaz distincte implantée à l'extérieur du fuselage.

Dans le système de propulsion selon l'invention, les turboréacteurs 11 sont fixés chacun à un mât 23 qui les relient à la partie arrière du fuselage 4 où ils sont implantés. Les arbres de transmission transversaux 18 sont situés à l'arrière des mâts 23 et parallèlement à ceux-ci. Les mâts 23 des turboréacteurs 11 sont profilés de façon à ce que chacun d'eux puisse s'intégrer à un carénage 24 englobant les mâts et les arbres de transmission transversaux 18. Ce carénage 24 s'étend transversalement à l'axe du fuselage 19 entre la partie arrière du fuselage 4 et des nacelles 25 englobant les turboréacteurs 11, et longitudinalement en avant des mâts 23 et en arrière des arbres de transmission transversaux 18. Les mâts 23 et les arbres de transmission transversaux 18 sont carénés afin de réduire la trainée aérodynamique de l'aéronef.

La soufflante 8 du propulseur BLI arrière 1 est entrainée par une ligne d'arbres de transmissions 18, 21 la reliant mécaniquement au rotor des turboréacteurs 11. L'architecture spécifique du système de propulsion selon l'invention permet d'éviter les pertes de poussée totale en cas de défaillance d'un des propulseurs 1 et 11. Ainsi, si un des turboréacteurs 11 est rendu inopérant pour une raison quelconque, le turboréacteur 11 restant opérationnel continue à délivrer sa poussée propre et à assurer l'entrainement du propulseur BLI arrière 1 qui peuvent ainsi contribuer à la poussée totale de l'aéronef. De même, en cas de défaillance du propulseur BLI arrière 1, les deux turboréacteurs 11 continuent à délivrer leur poussée propre. Afin d'isoler un des propulseurs 1 et 11 en cas de défaillance de celui-ci, et d'assurer la continuité opérationnelle des propulseurs restants, un ou plusieurs dispositifs de sécurité 26 sont intégrés à la chaine de transmission reliant les rotors des turboréacteurs 11 à la soufflante 8 du propulseur BLI arrière 1. Ces dispositifs de sécurité 26 découplent une partie motrice d'une partie réceptrice en cas de surcharge sur une ligne de transmission. Ils peuvent être intégrés à l'arbre de transmission longitudinal 21 ou à chacun des arbres de transmission transversaux 18 ou sur les trois arbres de transmission. Indépendamment ou cumulativement aux dispositifs de sécurité 26 des arbres de transmissions 18 et 21, des dispositifs de sécurité 26 peuvent être intégrés aux rotors des turboréacteurs 11 et du propulseur BLI arrière 1.

Ces dispositifs de sécurité 26 peuvent être sélectionnés parmi les dispositifs mécaniques connus permettant d'interrompre une ligne de transmission en cas de blocage ou de surcharge de la partie motrice ou de la partie réceptrice reliées entre elles par la ligne de transmission. Ces dispositifs permettent en cas de surcharge d'assurer une continuité de fonctionnement et/ou d'éviter d'endommager les éléments mécaniques des dispositifs à protéger. Il existe différents types de dispositifs de sécurité que l'on peut classer globalement en deux catégories. Il existe des dispositifs de sécurité dont un des composants est calibré pour se rompre en cas de surcharge, par exemple les limiteurs de couple à vis ou axe de cisaillement. Dans ces dispositifs, un élément mécanique compris dans un coupleur reliant deux parties d'un arbre de transmission casse en cas de surcharge. La liaison mécanique reliant l'organe moteur ou plusieurs organes moteurs à un ou plusieurs organes récepteurs est ainsi interrompue de façon permanente jusqu'au remplacement, généralement facile, de l'élément de rupture. Ainsi l'organe défaillant est séparé de la ligne de transmission qui continue à relier les organes mécaniques restant opérationnels. Il existe aussi des dispositifs de sécurité qui peuvent interrompre momentanément une chaine d'arbres de transmission en cas de surcharge de l'organe moteur ou de l'organe récepteur. Ainsi lorsque la surcharge disparaît la chaine de transmission revient à un fonctionnement normal. Dans certains de ces dispositifs de sécurité intermittents, la transmission du couple moteur est totalement interrompue durant la phase de surcharge alors que dans d'autres un couple minimum continue à être transmis ce qui permet d'éliminer certaines causes de surcharge sans endommagement du récepteur tel que la soufflante du propulseur BLI 1 ou du ou des turboréacteurs 11.

Dans tous les cas, l'aéronef continue à bénéficier d'une poussée partielle qui est partagée de façon constante entre les propulseurs restant opérationnels. L'aéronef peut ainsi rester opérationnel et manoeuvrable jusqu'à son atterrissage.

La combinaison des avantages obtenus par les différents aspects de l'invention permet d'obtenir une réduction de consommation pour un aéronef équipé d'un système de propulsion selon l'invention d'environ 5% comparé à un aéronef équipé d'un système de propulsion comprenant deux turboréacteurs suspendus sous les ailes tel qu'illustré à la figure 2. Cette économie en carburant est principalement obtenue grâce à des pertes énergétiques réduites du fait de la transmission mécanique entre les turboréacteurs et le propulseur BLI arrière, à une ligne de transmission plus légère, à moins de fluctuations de la proportion de la poussée de la soufflante du propulseur BLI entre les différentes phases de vol, et à la possibilité d'augmenter l'effet BLI sur la propulsion de l'aéronef. Plus spécifiquement, la réduction de la consommation en carburant obtenue pour un aéronef équipé d'un système de propulsion selon l'invention dont le propulseur BLI arrière produit 33% de la poussée totale est comprise entre 4,1% et 4,6% comparé à un aéronef équipé d'un système de propulsion tel qu'illustré à la figure 2. Lorsque la proportion de la poussée fournie par le propulseur BLI arrière est portée à 60%, alors la réduction de consommation en carburant peut aller jusqu'à une valeur comprise entre 4,9% et 5,4%.

Bien que dans la description ci-dessus, les aspects particuliers de l'invention, notamment la mise en oeuvre d'une ligne de transmission compacte et essentiellement mécanique permise par les positions des turboréacteurs 11 proches du propulseur BLI 1, aient été décrits dans le contexte d'un système de propulsion comprenant un propulseur BLI 1 et deux turboréacteurs 11 implantés en partie arrière de fuselage, ils pourraient être mis en oeuvre dans d'autres configurations avec d'autres types de groupe propulseurs et une ligne de transmission les reliant différente de celle décrite ci-dessus.

## Revendications

1. Aéronef comprenant un fuselage et une voilure, le fuselage comprenant une partie arrière de fuselage et une queue, ledit aéronef comprenant également un système de propulsion comprenant :
- un premier dispositif de propulsion situé au niveau de la partie arrière (4) dudit fuselage et constitué d'au moins un propulseur BLI (1) comprenant une soufflante (8);
- un deuxième dispositif de propulsion constitué d'au moins un turboréacteur double flux (11) ; et
- un dispositif de transmission couplant les premier et deuxième dispositifs de propulsion afin de transmettre une partie de l'énergie générée par le deuxième dispositif de propulsion au premier dispositif de propulsion, ledit deuxième dispositif de propulsion générant ainsi l'énergie nécessaire pour entrainer en rotation la soufflante (8) du ou des propulseurs BLI (1) ;
dans lequel la poussée produite par les premier et deuxième dispositifs de propulsion contribue à générer la poussée totale de l'aéronef ;
ledit système de propulsion étant tel que : l'au moins un turboréacteur double flux (11) constituant le deuxième dispositif de propulsion est situé au moins d'un côté de la partie arrière du fuselage (4) entre la queue du fuselage et la voilure de l'aéronef, le premier dispositif de propulsion génère entre 20% et 80% de la poussée totale de l'aéronef;
**caractérisé en ce que**
le dispositif de transmission intègre au moins un dispositif de sécurité (26) intermittent apte à interrompre ou à réduire à un minimum la transmission d'énergie mécanique en cas de surcharge et à ramener la transmission d'énergie mécanique à un fonctionnement normal lorsque la surcharge disparaît.

2. Aéronef selon la revendication 1, dans lequel le deuxième dispositif de propulsion comprend deux propulseurs classiques (11) situés de part et d'autre de la partie arrière du fuselage (4) de l'aéronef, et le premier dispositif de propulsion comprend un propulseur BLI (1).

3. Aéronef selon l'une quelconque des revendications 1 ou 2, dans lequel ledit dispositif de transmission est essentiellement de type mécanique.

4. Aéronef selon la revendication 3, dans lequel le dispositif de transmission comprend au moins un arbre de transmission primaire (18) relié mécaniquement au deuxième dispositif de propulsion et un arbre de transmission secondaire (21) relié mécaniquement au premier dispositif de propulsion.

5. Aéronef selon la revendication 4, **caractérisé en ce que** :
- l'arbre de transmission secondaire (21) est relié mécaniquement par une de ses extrémités à la soufflante (8) dudit propulseur BLI (1) ; et
- le dispositif de transmission comprend deux arbres de transmission primaire (18) chacun relié mécaniquement par une de leurs extrémités à un des propulseurs classiques (11).

6. Aéronef selon la revendication 5, dans lequel un dispositif de sécurité (26) est intégré sur chacun des arbres de transmission primaires (18) et secondaire (21) et/ou au niveau des rotors des propulseurs (1 ; 11).

7. Aéronef selon l'une des revendications précédentes, dans lequel les propulseurs classiques (11) sont chacun reliés à la partie arrière de fuselage (4) par un mat profilé (23) et dans laquelle les arbres de transmission primaire (18) sont montés en arrière desdits mâts (23) et transversalement à l'axe général du fuselage (19).

## Patentansprüche

1. Luftfahrzeug, das einen Rumpf und eine Tragfläche umfasst, wobei der Rumpf einen hinteren Rumpfteil und ein Heck umfasst, wobei das Luftfahrzeug ebenfalls ein Antriebssystem umfasst, das Folgendes umfasst:
- eine erste Antriebsvorrichtung, die sich im Bereich des hinteren Teils (4) des Rumpfes befindet und von mindestens einem BLI-Triebwerk (1) gebildet wird, das einen Bläser (8) umfasst;
- eine zweite Antriebsvorrichtung, die von mindestens einem Zweistromstrahltriebwerk (11) gebildet wird; und
- eine Übertragungsvorrichtung, die die erste und die zweite Antriebsvorrichtung koppelt, um einen Teil der von der zweiten Antriebsvorrichtung erzeugten Energie auf die erste Antriebsvorrichtung zu übertragen, wobei die zweite Antriebsvorrichtung somit die Energie erzeugt, die erforderlich ist, um den Bläser (8) des BLI-Triebwerks bzw. der BLI-Triebwerke (1) drehend anzutreiben;
wobei der von der ersten und der zweiten Antriebsvorrichtung produzierte Schub dazu beiträgt, den Gesamtschub des Luftfahrzeugs zu erzeugen;
wobei das Antriebssystem derart ist, dass: das mindestens eine Zweistromstrahltriebwerk (11), das die zweite Antriebsvorrichtung bildet, sich mindestens auf einer Seite des hinteren Teils des Rumpfes (4) zwischen dem Heck des Rumpfes und der Tragfläche des Luftfahrzeugs befindet, die erste Antriebsvorrichtung zwischen 20 % und 80 % des Gesamtschubs des Luftfahrzeugs erzeugt;
**dadurch gekennzeichnet, dass** die Übertragungsvorrichtung mindestens eine intermittierende Sicherheitsvorrichtung (26) beinhaltet, die in der Lage ist, die Übertragung von mechanischer Energie im Falle einer Überlastung zu unterbrechen oder auf ein Minimum zu reduzieren und die Übertragung von mechanischer Energie auf einen Normalbetrieb zurückzubringen, wenn die Überlastung verschwindet.

2. Luftfahrzeug nach Anspruch 1, wobei die zweite Antriebsvorrichtung zwei herkömmliche Triebwerke (11) umfasst, die sich auf beiden Seiten des hinteren Teils des Rumpfes (4) des Luftfahrzeugs befinden, und die erste Antriebsvorrichtung ein BLI-Triebwerk (1) umfasst.

3. Luftfahrzeug nach einem der Ansprüche 1 oder 2, wobei die Übertragungsvorrichtung im Wesentlichen vom mechanischem Typ ist.

4. Luftfahrzeug nach Anspruch 3, wobei die Übertragungsvorrichtung mindestens eine primäre Übertragungswelle (18), die mechanisch mit der zweiten Antriebsvorrichtung verbunden ist, und eine sekundäre Übertragungswelle (21), die mechanisch mit der ersten Antriebsvorrichtung verbunden ist, umfasst.

5. Luftfahrzeug nach Anspruch 4, **dadurch gekennzeichnet, dass**:
- die sekundäre Übertragungswelle (21) über eines ihrer Enden mechanisch mit dem Bläser (8) des BLI-Triebwerks (1) verbunden ist; und
- die Übertragungsvorrichtung zwei primäre Übertragungswellen (18) umfasst, die jeweils über eines ihrer Enden mechanisch mit einem der herkömmlichen Triebwerke (11) verbunden sind.

6. Luftfahrzeug nach Anspruch 5, wobei an jeder der primären (18) und der sekundären (21) Übertragungswelle(n) und/oder im Bereich der Rotoren der Triebwerke (1; 11) eine Sicherheitsvorrichtung (26) integriert ist.

7. Luftfahrzeug nach einem der vorstehenden Ansprüche, wobei die herkömmlichen Triebwerke (11) jeweils über einen Profilmast (23) mit dem hinteren Teil des Rumpfes (4) verbunden sind, und wobei die primären Antriebswellen (18) hinter den Masten (23) und quer zur Hauptachse des Rumpfes (19) angebracht sind.

## Claims

1. An aircraft comprising a fuselage and a wing, the fuselage comprising a rear part of fuselage and a tail, said aircraft also comprising a propulsion system comprising:
- a first propulsion device located at the rear part (4) of said fuselage and consisting of at least one BLI propeller (1) comprising a fan (8);
- a second propulsion device consisting of at least one dual-flow turbojet engine (11); and
- a transmission device coupling the first and second propulsion devices in order to transmit a part of the energy generated by the second propulsion device to the first propulsion device, said second propulsion device thus generating the energy required to rotate the fan (8) of the BLI propeller(s) (1);
wherein the thrust produced by the first and second propulsion devices contributes to generating the total thrust of the aircraft;
said propulsion system being such that: said at least one dual-flow turbojet engine (11) constituting the second propulsion device is located on at least one side of the rear part of the fuselage (4) between the tail of the fuselage and the wing of the aircraft, the first propulsion device generates between 20% and 80% of the total thrust of the aircraft;
**characterised in that**
the transmission device incorporates at least one intermittent safety device (26) capable of interrupting or reducing to a minimum the transmission of mechanical energy in the event of an overload and of returning the transmission of mechanical energy to normal operation when the overload disappears.

2. The aircraft according to claim 1, wherein the second propulsion device comprises two conventional propellers (11) located on either side of the rear part of the fuselage (4) of the aircraft, and the first propulsion device comprises a BLI propeller (1).

3. The aircraft according to any one of claims 1 or 2, wherein said transmission device is essentially of the mechanical type.

4. The aircraft according to claim 3, wherein the transmission device comprises at least one primary transmission shaft (18) mechanically connected to the second propulsion device and a secondary transmission shaft (21) mechanically connected to the first propulsion device.

5. The aircraft as claimed in claim 4, **characterised in that**:
- the secondary transmission shaft (21) is mechanically connected at one end to the fan (8) of said BLI propeller (1); and
- the transmission device comprises two primary transmission shafts (18), each mechanically connected by one of their ends to one of the conventional propellers (11).

6. The aircraft according to claim 5, wherein a safety device (26) is integrated on each of the primary (18) and secondary (21) transmission shafts and/or at the rotors of the propellers (1; 11).

7. The aircraft according to one of the preceding claims, wherein the conventional propellers (11) are each connected to the rear part of fuselage (4) by a profiled mast (23) and wherein the primary transmission shafts (18) are mounted behind said masts (23) and transversely to the general axis of the fuselage (19).
